# EUROPEAN PATENT SPECIFICATION

(11) **EP 1 624 646 B1**
(45) Date of publication and mention of the grant of the patent: **24.10.2007**
(21) Application number: 05016896.2
(22) Date of filing: 03.08.2005
(51) Int. Cl.: H04L 29/12

(54) **Call agent apparatus, IP telephone apparatus and IP telephone system**
Call-Agent-Apparat, IP-basiertes Fernsprechgerät und IP-basiertes Fernsprechsystem
Dispositif agent d'appel, appareil téléphonique IP et système téléphonique IP

(30) Priority: 06.08.2004 JP 2004231153; 24.03.2005 JP 2005086439
(43) Date of publication of application: 08.02.2006
(73) Proprietor: MATSUSHITA ELECTRIC INDUSTRIAL CO., LTD, Kadoma-shi, Osaka 571-8501 (JP)
(72) Inventor: Kobayashi, Kazuto, Kawasaki-shi Kanagawa-ken, 213-0013 (JP); Miyajima, Akira, Yokohama-shi Kanagawa-ken, 222-0023 (JP)
(74) Representative: Grünecker, Kinkeldey, Stockmair & Schwanhäusser Anwaltssozietät

(56) References cited:
- WO-A-03/107627
- US-A1- 2005 141 485
- ETSI: "ENUM Administration in Europe" ETSI STANDARDS, EUROPEAN TELECOMMUNICATIONS STANDARDS INSTITUTE, SOPHIA-ANTIPO, FR, July 2002 (2002-07), page complete, XP002311971 ISSN: 0000-0001
- "Universal Communications Identifier (UCI); System Framework; DEG HF-00025" ETSI STANDARDS, EUROPEAN TELECOMMUNICATIONS STANDARDS INSTITUTE, SOPHIA-ANTIPO, FR, no. V100, May 2002 (2002-05), XP014022683 ISSN: 0000-0001
- PETERSON H LIU J YU NEUSTAR B CAMPBELL DYNAMICSOFT J: "Using ENUM for SIP Applications" IETF STANDARD-WORKING-DRAFT, INTERNET ENGINEERING TASK FORCE, IETF, CH, vol. sipping, no. 1, 8 February 2002 (2002-02-08), XP015027896 ISSN: 0000-0004

## Description

### BACKGROUND OF THE INVENTION

### 1. Field of the Invention

The present invention relates to a call agent apparatus, an IP telephone apparatus and an IP telephone system. The present invention particularly relates to a call agent apparatus, an IP telephone apparatus and an IP telephone system that delete a NAPTR resource record from an ENUM server.

### 2. Description of Related Art

Recently the Internet has been rapidly popularized. An IP telephone system has become the center of attention since a long distance communication can be performed at lower cost by using IP telephone apparatuses and since the IP telephone system enables users who have applied for the IP telephone system to communicate with each other through IP telephone apparatuses for free of charge. Additionally, an "ENUM (Telephone Number Mapping)" protocol is acknowledged as a protocol that associates the services using the Internet with the telephone numbers or associates the resources on the Internet with the telephone numbers. This ENUM protocol is specified in RFC2916 (Publication 1), which is being studied at the IETF (Internet Engineering Task Force) and the ITU-T (International Telecommunication Union-Telecommunication Standardization Sector).

The "ENUM" protocol has a function that converts a telephone number into a number corresponding to the E.164 system specified by the ITU-T and searches one of an IP address and a URI (Uniform Resource Identifier) using the mechanism of the DNS (Domain Name System) based on the converted telephone number.
In the technical specification of ETSI TS 102 051 v1.1.1" ENUM Administration in Europe" an implementation of ENUM is presented to assist European countries for respective national implementations. Therein, some principles, mechanisms and architectures are described relating to different aspects of an ENUM implementation. For instance, the ENUM architecture includes an ENUM Registrar, a Registrant and an ENUM Tier 2 Nameserver Provider. The Tier 2 Namesever keeps all NAPTR Resources Records of a given E. 164 number and a process is illustrated for creating/modifying/deleting the NAPTR Records in the Tier 2 database.
The document DEG|HF-00025 v1.0.0 "Universal Communications Identifier (UCI); System Framework" relates to a technical specification of the system architecture and operations needed for a UCl implementation. UCl is a single, unique identifier for a user that minimises the need to have many different identifiers for a range of different communication services. In addition, the UCl includes important additional information such as preferred language, label authenticity or alias. Some capabilities are described for editing a user profile connected to a UCI and for determining the user availability for communication. Furthermore a direct comparison is made with an ENUM implementation, additionally comprising a suggestion for implanting the UCI system as an extension of ENUM.
International Patent WO 03/107627 A1 discloses a system for consulting and/or updating DNS servers and/or LDAP directories. More specifically, resource records that are stored in a domain name server (DNS) are consulted or modified upon a request from a telecommunication terminal. For instance, an NAPTR record is described and means for updating the NAPTR records via a SMS, voice mode, web, Minitel or E-mail are illustrated.
The US Patent application US 2005 0141485A1 with publication date of June 30, 2005 relates to a communication apparatus, wherein an internal terminal that connects to a DNS server is able to acquire an external NAPTR record corresponding to the communication telephone number. A Home Gateway Apparatus manages the several internal communication apparatus of the internal network. Furthermore, an external and internal NAPTR record is established. The external NAPTR record comprises only those communication methods that are to be disclosed externally. Accordingly, the internal record comprises all communication methods available. In addition, the Home Gateway determines a NAPTR record of an external telephone number, when requested by an internal apparatus.

An ENUM system is also being studied so that a service is provided using the "ENUM" protocol. In this ENUM system, an end user of the IP terminal apparatus, such as, for example, an IP telephone apparatus which uses the ENUM system can select various functions (URI, the services using the URI {including telephone communication, e-mail and access to the database}). The end user, thus, needs to set the selected function into a "NAPTR (the Naming Authority Pointer)" resource record and to store the set NAPTR resource record in the ENUM system.

Additionally, the end user needs to instruct the ENUM server to transmit a request for the deletion when the registered NAPTR resource record is deleted.
[Publication 1] "ENUM Trial Japan First Report" ENUM Trial Japan, May 2004

However, the end user of the conventional IP terminal apparatus such as an IP telephone apparatus using the "ENUM" protocol was required to instruct the ENUM server to transmit a request for the deletion when the NAPTR resource record was deleted. It was problematic in that the operation of deleting the NAPTR resource record became complex for the end users since the end users themselves had to transmit, to the ENUM server, the request for the deletion.

### SUMMARY OF THE INVENTION

The present invention is provided to address the above-described problem. The objective of the present invention is to provide a call agent apparatus, an IP telephone apparatus and an IP telephone system that automatically delete user information of the IP telephone apparatus stored in an ENUM server, based on a telephone number of the IP telephone apparatus included in a request for deleting a NAPTR record transmitted from the IP telephone apparatus. The user information of the IP telephone apparatus is previously stored in the IP telephone apparatus corresponding to the telephone number of the IP telephone apparatus.

This invention relates to a call agent apparatus that controls a call connection of an IP telephone apparatus. The call agent apparatus includes a receiver that receives a request for deleting a NAPTR record transmitted from the IP telephone apparatus. The call agent apparatus also includes a deletion processor that transmits, to an ENUM server, a request for deleting a NAPTR record of an IP telephone apparatus, based on the telephone number of the IP telephone apparatus included in the request for the deletion received from the receiver. These and other invention objectives are achieved by means of the features of the independent claims.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a network configuration to which an IP telephone system according to the embodiment of the present invention applies;
Fig. 2 illustrates a block diagram describing a configuration of an IP telephone apparatus according to the embodiment of the present invention;
Fig. 3 illustrates a front view describing the appearance of the IP telephone apparatus shown in Fig. 2;
Fig. 4 illustrates a block diagram describing a configuration of a CA according to the embodiment of the present invention;
Fig. 5 illustrates a sequence diagram describing the IP telephone system according to the embodiment of the present invention; from when the IP telephone apparatus transmits, to the CA, a request for the registration of a NAPTR record, to when the NAPTR record of the IP telephone apparatus is deleted from the ENUM server,
Fig. 6 illustrates a flow chart describing the operation of the IP telephone system according to the sequence diagram shown in Fig. 5;
Fig. 7 illustrates a flow chart describing the operation following the operation according to Fig. 6;
Fig. 8 illustrates a sequence diagram describing the operation, part of which is changed from the operation shown in Fig. 5;
Fig. 9 illustrates a flow chart describing the operation of the IP telephone system according to the sequence diagram shown in Fig. 8; and
Fig. 10 illustrates a drawing describing an example where the user data is converted into the NAPTR record in the CA according to the embodiment of the present invention.

### DETAILED DESCRIPTION OF PREFERRED EMBODIMENTS

The embodiments of the present invention are explained in the following, in reference to the above-described drawings.

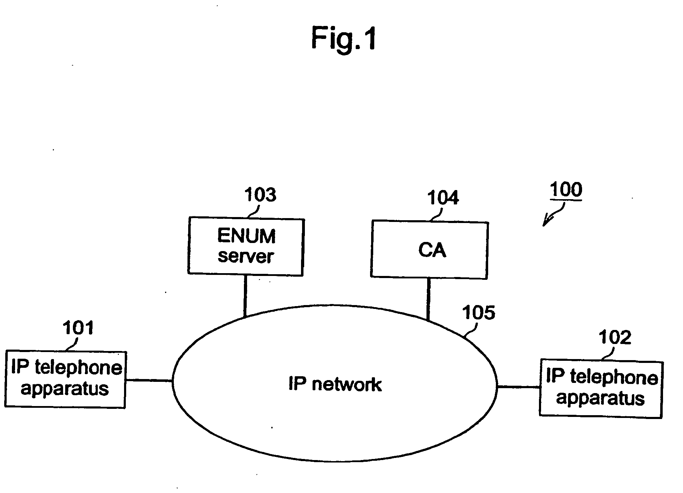

Fig. 1 is a diagram illustrating a network configuration of the IP telephone system according to the embodiment of the present invention. In Fig. 1, in IP telephone system 100, IP telephone apparatus 101, IP telephone apparatus 102, ENUM server 103, and call agent apparatus (hereafter referred to as CA) 104 are mutually connected via IP network 105. Also, an IP telephone system is not limited to the configuration described in Fig. 1 and can be configured to connect to three or more telephones.

IP telephone apparatus 101 (102) has functions that enable voice communication with another IP telephone apparatus via IP network 105.

ENUM (Telephone Number Mapping) server 103 has a database that stores a NAPTR (The Naming Authority Pointer) resource record (hereafter referred to as NAPTR record). ENUM server 103 returns, to IP telephone apparatus 101 (102), the NAPTR record stored in the database, in response to the request of IP telephone apparatus 101 (102).

CA 104 controls a call connection between IP telephone apparatus 101 and IP telephone apparatus 102 connected to IP network 105. CA 104 receives, from IP telephone apparatus 101 (102), which is the source IP telephone apparatus, a request for a call connection and performs the call connection with IP telephone apparatus 102 (101), which is the destination telephone apparatus, in response to the received request.

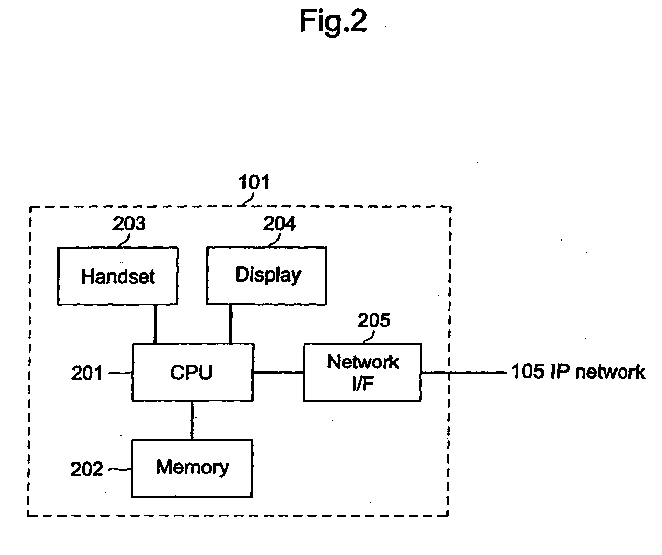

Fig. 2 is a block diagram illustrating a configuration of IP telephone apparatus 101 according to the embodiment of the present invention. IP telephone apparatus 102 has the same configuration as IP telephone apparatus 101.

In Fig. 2, IP telephone apparatus 101 is configured mainly with CPU 201, memory 202, handset 203, display 204 and network-interface 205 (henceforth referred to as network I/F).

CPU (Central Processing Unit) 201 controls all operations to perform voice communication with another IP telephone apparatus 102 via IP network 105 based on the program for controlling voice communication. The program is stored in memory 202. CPU 201, therefore, controls a call between the source and destination terminals, according to a call control protocol, such as SIP (Session Initiation Protocol) and H. 323. CPU 201 also transmits necessary requests to display 204 and network I/F 205.

In addition, CPU 201 controls the transmission of the message "Request the NAPTR record" to ENUM server 103 and the reception of the message "Respond indicating the deletion of the NAPTR record" from ENUM server 103. The message "Request the NAPTR record" is transmitted for requesting a NAPTR record corresponding to a destination terminal. The message "Respond indicating the deletion of the NAPTR record" is transmitted in response to the message "Request the NAPTR record". CPU 201 also controls to automatically transmit, from network I/F 205 to CA 104, a request for the registration of information regarding the terminal apparatus when the switch is initially turned ON after IP telephone apparatus 101 is installed and connected to IP network 105.

In addition, CPU 201 controls to automatically transmit, from network I/F 205 to CA 104, a request for the deletion "Register (Unregister)" when absent key 303 (which will be described later) is pressed. CPU 201 also controls to regularly transmit, from network I/F 205 to CA 104, a registration request "Register" for information regarding the terminal apparatus. CPU 102 further controls to suspend the transmission of the registration request "Register", when absent key 303 (which will be described later) is pressed. An "absent key" is provided on IP telephone apparatus 101. The "absent key" has a function to indicate that the user is not available when the user is out or is not at his desk. When the "absent key" is pressed, the NAPTR record of IP telephone apparatus 101 is deleted from an ENUM server. The user of IP telephone apparatus 101 can indicate to the user of another IP telephone apparatus that he is not available by turning off the display lamp of the another IP telephone apparatus, the display lamp indicating that the user is available. The "absent key" can be combined with the conventional "answering machine key", which is contained in the answering machine telephone function. In this case, when the "absent key" is pressed, IP telephone apparatus 101 deletes the NAPTR record and turns off the display lamp of the another IP telephone apparatus, the display lamp indicating that the user is available. At the same time, IP telephone apparatus 101 performs the same process in order to set a conventional recording mode.

In addition, CPU 201 regularly transmits, from network I/F 205 to CA 104, a query for the NAPTR record of IP telephone apparatus 102. Upon receiving, from CA 104 to network I/F 205, a response indicating that the NAPTR record of IP telephone apparatus 102 is deleted, in response to the request, CPU 201 turns off display lamp 305 indicating that the user is available. Display lamp 305 will be described later.

Memory 202 has a function as a ROM (Read Only Memory) that stores a program for controlling voice communication and so on that is conducted by CPU 201. Memory 202 also has a function as a RAM (Random Access Memory), which is used as a work-memory when CPU 201 performs a program.

Handset 203 outputs, to CPU 201, an off-hook signal or an on-hook signal, according to the off-hook operation or an on-hook operation performed by the user. Handset 203 also contains a microphone and a speaker. Handset 203 converts the user's transmitted voice into the transmitted voice signal and outputs, to CPU 201, the converted voice signal during voice communication between the source and destination terminals. At the same time, handset 203 inputs the received voice signal from CPU 201 and outputs the received voice signal as received voice via the speaker.

Display 204 is configured with a liquid crystal panel and so forth. Display 204 displays the current status of IP telephone apparatus 101 as well as the name, the address, the telephone number, etc. of the source IP telephone apparatus inputted by CPU 201.

Network I/F 205 is an interface for IP network 105 that is connected to IP telephone apparatus 101. Network I/F 205 transmits, to CA 104, a request for the deletion "Register (Unregister)" upon the control of CPU 201 and regularly transmits, to CA 104, a request for the registration "Register". Network I/F 205 also receives a response indicating that the NAPTR record of IP telephone apparatus 102 is deleted. Network I/F 205 further functions as a transmitter and a receiver.

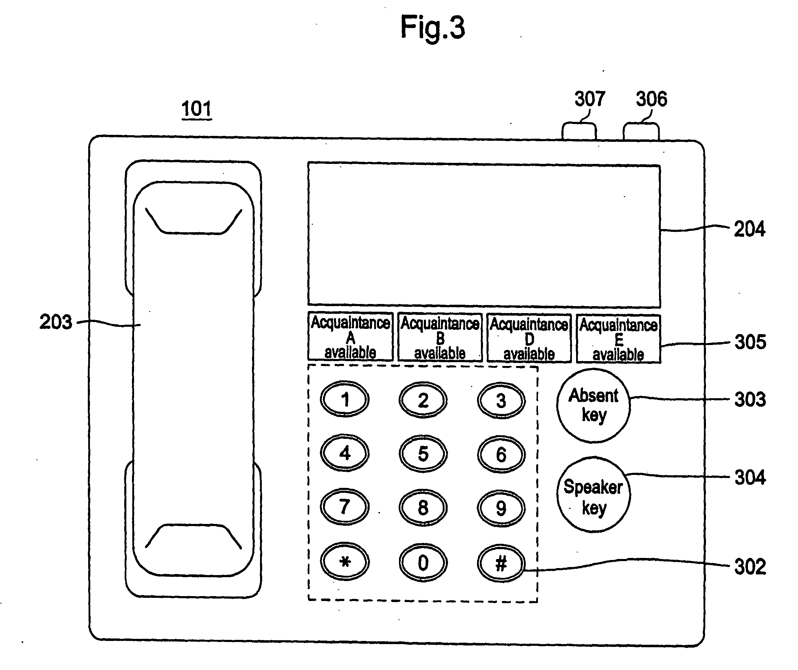

Fig. 3 is a front view illustrating the appearance of IP telephone apparatus 101 according to the present embodiment. IP telephone apparatus 102 has the same configuration.

In Fig. 3, IP telephone apparatus 101 includes a microphone, handset 203, ten-key pad 302, absent key 303, speaker key 304 and display lamp 305, which indicates that the user is available. The microphone receives a user's voice. Handset 203 has a speaker that outputs the received voice. Ten-key pad 302 inputs telephone numbers and so on. Absent key 303 can switch on and off the answering machine telephone function. Speaker key 304 switches output of the voice from the speaker of handset 203 to an external speaker. Display lamp 305 shows that the user of another IP telephone apparatus is available. On the side area, IP telephone apparatus 101 contains LAN interface (LAN I/F) 306 and public line interface (public line I/F) 307. The LAN interface is connected to IP network 105. The public line interface is connected to the public line network. Absent key 303 functions as an indicator.

Above display lamp 305 that indicates that the user is available, display 204 is provided. Display 204 is configured with a liquid crystal panel and so on. Display 204 displays the telephone number of the source IP telephone apparatus based on the NAPTR record that is received from ENUM server 103 or the name, the address and so on registered in the telephone directory corresponding to the telephone number of the source IP telephone apparatus. Also, display lamp 305 is able to display, for up to four users of the IP telephone apparatuses, that the user is available. Fig. 3 illustrates an instance where the display lamps are configured to display the information regarding acquaintance A, acquaintance B, acquaintance D and acquaintance E. Display lamp 305 indicating that the user is available also functions as a display. Further, display lamp 305 of the IP telephone apparatus of acquaintance A indicating that the user is available is lighted, for example, when the IP telephone apparatus of acquaintance A is turned ON or when the key provided on the IP telephone apparatus of acquaintance A and indicating that the user is available is pressed and when a message indicating that the user of the IP telephone apparatus of acquaintance A is available is received from the IP telephone apparatus of acquaintance A. When the four display lamps of acquaintance A, acquaintance B, acquaintance D and acquaintance E indicating that the user is available are lighted, it indicates that a message that the user of the IP telephone apparatus is available has been received from each of the four IP telephone apparatuses. Additionally, memory 202 of the IP telephone apparatus stores the identification information of the lamp, the names of acquaintances (for example, A) and the telephone numbers corresponding to each other. The identification information of the lamp indicates, for example, which lamp of the four display lamps 305 indicating that the user is available and provided on the IP telephone apparatuses applies to an individual call destination (for example, lamps from left to right in order are specified as lamp 1, lamp 2, lamp 3 and lamp 4). Therefore, by referring to memory 202, the user of the IP telephone apparatus can determine to which telephone number a request for the NAPTR record of the IP telephone apparatus should be transmitted and which display lamp indicating that the user is available should be turned off, upon receiving the response indicating that the NAPTR record of the IP telephone apparatus is deleted.

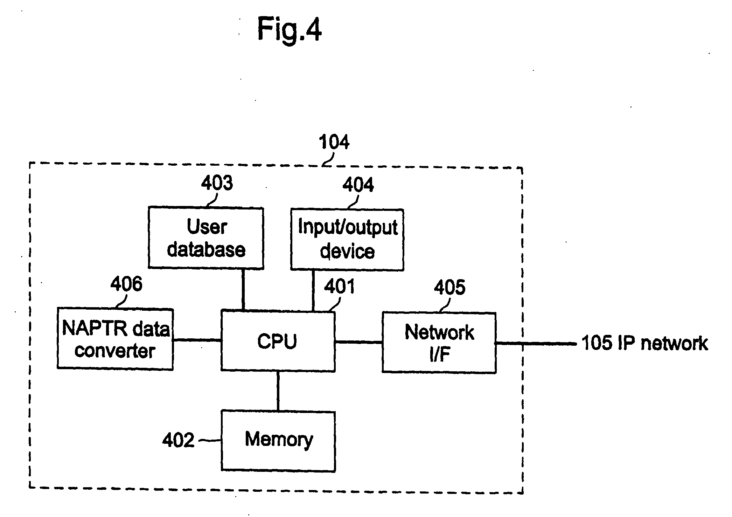

Fig. 4 is a block diagram illustrating the configuration of CA 104 according to the embodiment of the present invention. In Fig. 4, CA 104 is configured mainly with CPU 401, memory 402, user database 403, input/output device 404, network I/F 405 and NAPTR data converter 406.

CPU 401 controls the entire operation of CA 104 based on the control program stored in memory 402. Also, upon receiving, for example, from IP telephone apparatus 101, a request for the registration of a NAPTR record (Register), CPU 401 searches the user data from user database 403, which will be described later, and transmits the user data to NAPTR data converter 406. CPU 401 then stores the converted NAPTR record in ENUM server 103.

Also, when CPU 401, for example, receives, from IP telephone apparatus 101, a request for deleting a NAPTR record "Register (Unregister)", or when the reception of the request for registering the terminal information that is regularly received from IP telephone apparatus 101 is suspended, CPU 401 refers to the user data stored in user database 403, and transmits, to ENUM server 103, a request for deleting the NAPTR record of IP telephone apparatus 101. User database 403 will be described later.

Further, for example, when a request for the NAPTR record of IP telephone apparatus 101 is regularly received from IP telephone apparatus 102 via network I/F 405 and when the deletion process of the NAPTR record of IP telephone apparatus 101 is completed, CPU 401 returns, to IP telephone apparatus 102 via network I/F 405, a response indicating that the NAPTR record of IP telephone apparatus 101 is deleted. CPU also functions as a deletion processor.

Memory 402 has a function as a ROM that stores a control program and so on that is performed by CPU 401. Memory 402 also has a function as a RAM that is used as a work-memory when CPU 401 performs a program.

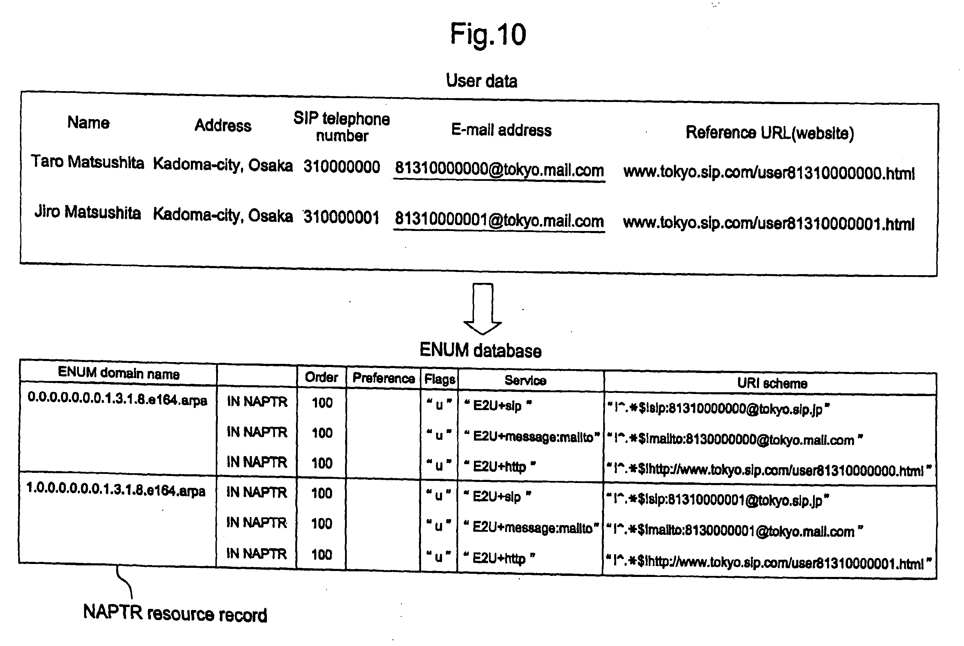

User database 403 as shown in Fig. 10 previously stores, by a system administrator or the like, the name, the address, the telephone number, the e-mail address, the reference URL (website) as the user database of IP telephone apparatus 101 and IP telephone apparatus 102, corresponding to each of the users of IP telephone apparatus 101 and IP telephone apparatus 102.

Input/output device 404 is configured with an input device and with an output device. The input device includes a keyboard that is used when CA 104 is maintained. The output device includes a display that displays the maintenance information. Network I/F 405 is an interface to IP network 105 that is connected with CA 104. Further, network I/F 405 functions as a receiver and a transmitter.

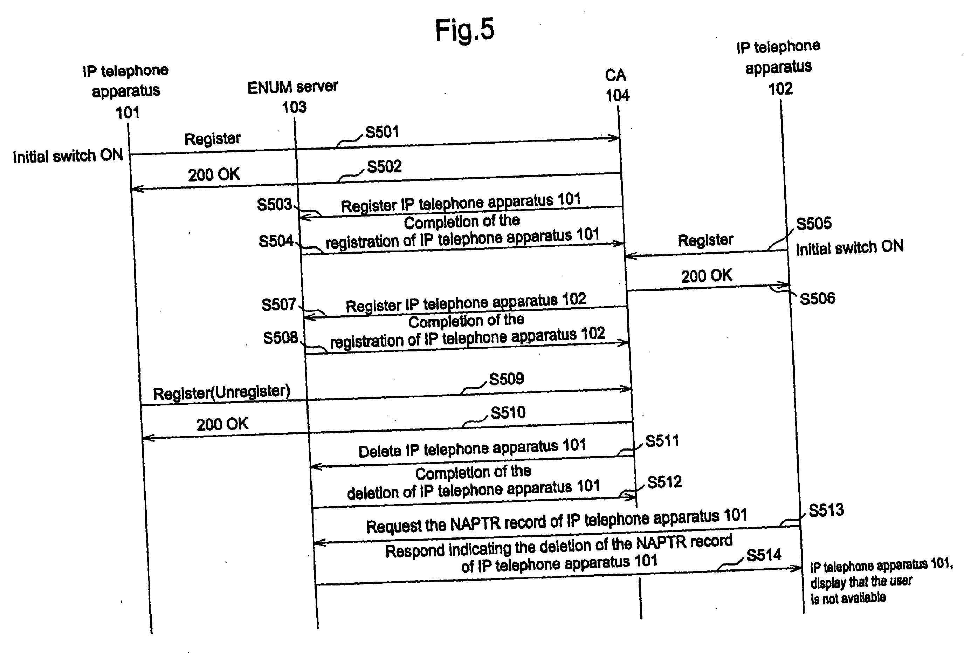

Next, the operation is described, in IP telephone system 100 in Fig. 1, from when IP telephone apparatus 101 transmits, to CA 104, a request for the registration of a NAPTR record; to when IP telephone apparatus 101 transmits, to CA 104, a request for deleting the NAPTR record; and further to when ENUM server 103 transmits, to IP telephone apparatus 102, a response indicating that the NAPTR record of IP telephone apparatus is deleted. The description refers to the sequence diagram in Fig. 5.

As a premise of describing the operation of Fig. 5, CA 104 previously stores, into user database 403, the user data shown in Fig. 5 as the user data of IP telephone apparatus 101 and IP telephone apparatus 102.

In the sequence diagram shown in Fig. 5, the operation is described from when IP telephone apparatus 101 transmits, to CA 104, a request for the registration of a NAPTR record of IP telephone apparatus 101 when IP telephone apparatus 101 is initially turned ON; to when IP telephone apparatus 101 transmits, to CA 104, a request for deleting the NAPTR record of IP telephone apparatus 101; and to when CA 104 performs, to ENUM server 103, the deletion of the NAPTR record of IP telephone apparatus 101; and further to when ENUM server 103 transmits, to IP telephone apparatus 102, a response indicating that the NAPTR record of IP telephone apparatus 101 is deleted.

Next, the installation of IP telephone apparatus 101 is completed for connecting IP telephone apparatus 101 to IP network 105, and IP telephone apparatus 101 is turned ON. Then, CPU 201 in IP telephone apparatus 101 transmits a message "Register" to CA 104 in order to store the apparatus information of IP telephone apparatus 101 into the database of CA 104 (step S501). According to the present embodiment, when the "Register" message is transmitted, the NAPTR record of IP telephone apparatus 101 is stored into ENUM server 103. The message "Register" includes the telephone number, the user ID, the password, etc. of IP telephone apparatus 101.

Upon receiving the message "Register" from IP telephone apparatus 101 via network I/F 405, CA 104 returns, to IP telephone apparatus 101, a message "200 OK" (step S502).

Next, CPU 401 in CA 104 reads, from user database 403, the user data based on the telephone number of the IP telephone apparatus included in the message "Register". Then, CPU 401 transmits the user data to NAPTR data converter 406. NAPTR data converter 406 converts the user data transmitted from CPU 401 into a NAPTR record and transmits the converted NAPTR record to CPU 401 as shown in Fig. 10.

Next, CPU 401 in CA 104 transmits, from network I/F 405 to ENUM server 103, a message "Register IP telephone apparatus 101" including the NAPTR record transmitted from NAPTR data converter 406 (step S503). Upon receiving the message "Register IP telephone apparatus 101" from CA 104, ENUM server 103 starts an application software such as "Nsupdate" and stores, into the database, the NAPTR record included in the message "Register IP telephone apparatus 101". Then, ENUM server 103 returns, to CA 104, a message "Completion of the registration of IP telephone apparatus 101" (step S504).

Next, the installation of IP telephone apparatus 102 is completed for connecting IP telephone apparatus 102 to IP network 105, and IP telephone apparatus 102 is turned ON. Then, CPU 201 in IP telephone apparatus 102 transmits a message "Register" to CA 104 in order to store the apparatus information of IP telephone apparatus 102 into CA 104. According to the present embodiment, the message "Register" includes the telephone number, the user ID, the password, etc. of IP telephone apparatus 102.

Upon receiving the message "Register" from IP telephone apparatus 102 via network I/F 405, CA 104 returns, to IP telephone apparatus 102, a message "200 OK" (step S506).

Next, CPU 401 in CA 104 reads, from user database 403, the user data based on the telephone number of the IP telephone apparatus included in the message "Register". Then, CA 104 transmits the user data to NAPTR data converter 406. NAPTR data converter 406 converts the user data transmitted from CPU 401 into a NAPTR record and transmits the converted NAPTR record to CPU 401.

Next, CPU 401 in CA 104 transmits, from network I/F 405 to ENUM server 103, a message "Register IP telephone apparatus 102" including the NAPTR record transmitted from NAPTR data converter 406 (step S507). Upon receiving the message "Register IP telephone apparatus 102" from CA 104, ENUM server 103 starts an application software such as "Nsupdate" and stores, into the database, the NAPTR record included in the message "Register IP telephone apparatus 102". Then, ENUM server 103 returns, to CA 104, a message "Completion of the registration of IP telephone apparatus 102" (step S508).

With the above-described processes, IP telephone apparatus 101 and IP telephone apparatus 102 complete the process for registering respective NAPTR records into ENUM server 103.

Next, when the user of IP telephone apparatus 101 presses absent key 303, CPU 201 recognizes an ON signal of absent key 303 and transmits, to CA 104, a message "Register (Unregister)" in order to transmit a request for deleting the NAPTR record of the apparatus information from ENUM server 103 (step S509). According to the embodiment, the message "Register (Unregister)" includes the telephone number, the user ID, the password, etc. of IP telephone apparatus 101.

Also, IP telephone apparatus 101 can be configured to regularly transmit, to CA 104, the message "Register", which is the request for the registration of information regarding the terminal apparatus and configured to suspend the transmission of the message "Register" to CA 104, when absent key 303 is pressed.

Next, upon receiving the message "Register (Unregister)" from IP telephone apparatus 101 via network I/F 405, CA 104 returns, to IP telephone apparatus 101, a message "200 OK" (step S510).

Also, when CA 104 has received a message "Register" that is regularly transmitted from IP telephone apparatus 101 and the reception of the message "Register" is suspended, CA 104 can be configured not to return, to IP telephone apparatus 101, the message "200 OK". In other words, when CA 104 has received a message "Register (Unregister)" from IP telephone apparatus 101 or when the reception of the message "Register" is suspended, CA 104 can be configured to start the deletion of the NAPTR record of IP telephone apparatus 101.

Next, with the above-described operation, when the deletion of the NAPTR record of IP telephone apparatus 101 starts, CPU 401 in CA 104 refers to the user data of IP telephone apparatus 101 stored in user database 403, based on the message "Register (Unregister)" or the telephone numbers of IP telephone apparatus 101 included in the message "Register". Then, CPU 401 transmits, from network I/F 405 to ENUM server 103, a message "Delete IP telephone apparatus 101" (step S511).

Then, the telephone number of the user data (Fig. 10) is converted into the ENUM domain name shown in Fig. 10. In this way, the NAPTR record to be deleted can be specified based on the ENUM domain name. First, telephone number "310000000" is converted into "81310000000" including the country code. Then, dots are inserted between the numbers, resulting in "8.1.3.1.0.0.0.0.0.0.0". Next, the numbers are reversed, and a data string ".e164.arpa" is added at the end and then converted into domain name "0.0.0.0.0.0.0.1.3.1.8. e164. arpa".

Next, upon receiving the message "Delete IP telephone apparatus 101" from CA 104, ENUM server 103 starts an application software such as "Nsupdate" and deletes the NAPTR record of IP telephone apparatus 101 stored in the database. Then, ENUM server 103 returns, to CA 104, a message "Completion of the deletion of IP telephone apparatus 101" (step S512).

With the above-described processes, IP telephone apparatus 101 completes the process for deleting the NAPTR record from ENUM server 103.

Next, IP telephone apparatus 102 regularly transmits, to CA 104, a message "Request the NAPTR record of IP telephone apparatus 101" using the polling function (step S513). Upon regularly receiving the message "Request the NAPTR record of IP telephone apparatus 101" transmitted from IP telephone apparatus 102 and when the NAPTR record of IP telephone apparatus 101 is deleted, CPU 401 in CA 104 returns, from network I/F 405 to IP telephone apparatus 102 a message "Respond indicating the deletion of the NAPTR record of IP telephone apparatus 101" (step S514).

Next, upon receiving, from CA 104, the message "Respond indicating the deletion of the NAPTR record of IP telephone apparatus 101" via network I/F 205, CPU 201 in IP telephone apparatus 102 recognizes that the NAPTR record of IP telephone apparatus 101 has been deleted, and turns off display lamp 305 indicating that the user is available. The user of IP telephone apparatus 102 can confirm that the user of IP telephone apparatus 101 is not available.

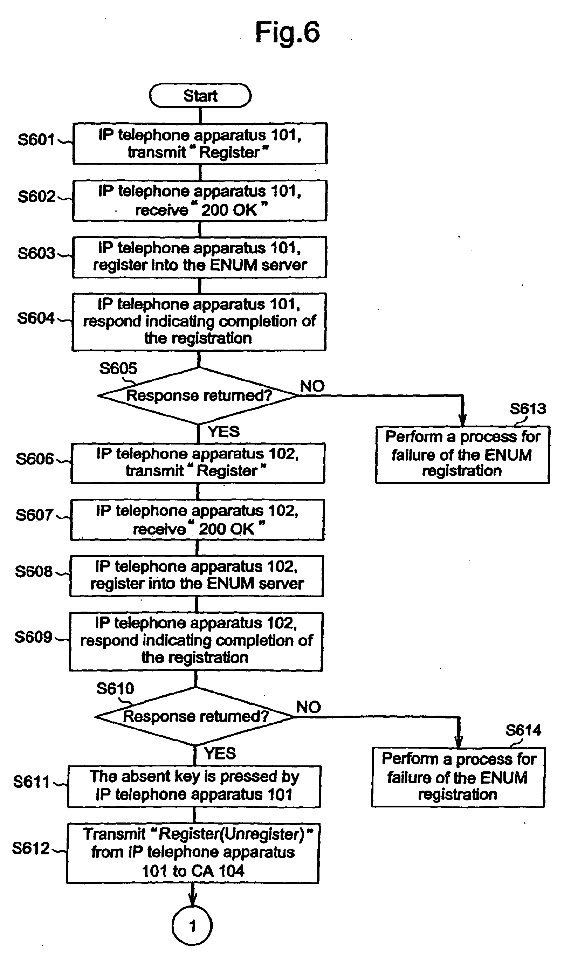

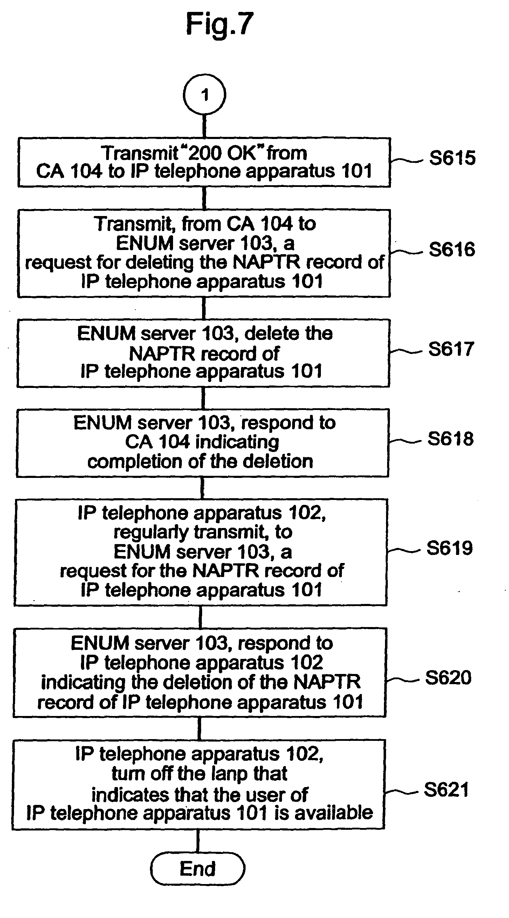

Next, the following describes the operation of IP telephone apparatus 101, CA 104 and IP telephone apparatus 102, according to the sequence diagram shown in Fig. 5 with reference to the flowcharts illustrated in Fig. 6 and Fig. 7. In user database 403 in CA 104, the respective user data of IP telephone apparatus 101 and IP telephone apparatus 102 shown in Fig. 10 is previously stored. In addition, though Fig. 10 does not show the illustration, the information regarding the existence of the terminal registration; that is, the information regarding whether or not the terminal information of the IP telephone apparatus is registered in CA 104 according to each of the user data (or the information can be stored in the memory of CA 104 separately from the user data.) When the CA receives a message "Register" from the IP telephone apparatus, "Registration is confirmed" is registered as information regarding the existence of the terminal registration. On the other hand, when the CA receives a message "Unregister" from the IP telephone apparatus, "No registration" is registered as information regarding the existence of the terminal registration. The CA controls a call connection between the IP telephone apparatuses, when the terminal information of the IP telephone apparatuses are registered in the CA.

Next, the installation of IP telephone apparatus 101 is completed for connecting IP telephone apparatus 101 to IP network 105, and IP telephone apparatus 101 is turned ON. Then, CPU 201 in IP telephone apparatus 101 transmits a message "Register" to CA 104 in order to store the terminal information into CA 104 (step S601) and receives a message "200 OK" from CA 104 (step S602).

Next, CA 104 reads, from user database 403, the user data, based on the telephone number of the IP telephone apparatus included in the message "Register" that is received from IP telephone apparatus 101. Then, CA 104 registers, in the user data of IP telephone apparatus 101, a message "Registration is confirmed". Next, NAPTR data converter 406 converts the necessary part of the user data into a NAPTR record and transmits, to ENUM server 103, a message "Register IP telephone apparatus 101" including the converted NAPTR record (step S603).

Next, upon receiving the message "Register IP telephone apparatus 101" including the NAPTR record from CA 104, ENUM server 103 stores, into the database, the NAPTR record of IP telephone apparatus 101. Then, ENUM server 103 returns, to CA 104, a message "Completion of the registration of IP telephone apparatus 101" (step S604).

Next, CA 104 determines whether or not the message "Completion of the registration of IP telephone apparatus 101" is returned from ENUM server 103 (step S605). When CA 104 receives, from ENUM server 103, the message "Completion of the registration of IP telephone apparatus 101" (step S605: YES), CA 104 completes the registration of the NAPTR record of IP telephone apparatus 101.

Next, the installation of IP telephone apparatus 102 is completed for connecting IP telephone apparatus 102 to IP network 105, and IP telephone apparatus 102 is turned ON. Then, CPU 201 in IP telephone apparatus 102 transmits a message "Register" to CA 104 in order to store the terminal information into CA 104 (step S606) and receives a message "200 OK" from CA 104 (step S607).

Next, CA 104 reads, from user database 403, the user data, based on the telephone number of the IP telephone apparatus included in the message "Register" that is received from IP telephone apparatus 102. Then, CA 104 registers, in the user data of IP telephone apparatus 102, a message "Registration is confirmed". Next, NAPTR data converter 406 converts the necessary part of the user data into a NAPTR record and transmits, to ENUM server 103, a message "Register IP telephone apparatus 102" including the converted NAPTR record (step S608).

Upon receiving the message "Register IP telephone apparatus 102" from CA 104, ENUM server 103 stores, into the database, the NAPTR record of IP telephone apparatus 102. Then, ENUM server 103 returns, to CA 104, a message "Completion of the registration of IP telephone apparatus 102" (step S609).

Next, CA 104 determines whether or not the message "Completion of the registration of IP telephone apparatus 102" is returned from ENUM server 103 (step S610). When CA 104 receives, from ENUM server 103, the message "Completion of the registration of IP telephone apparatus 102" (step S610: YES), CA 104 completes the registration of the NAPTR record of IP telephone apparatus 102.

Additionally, in step S605, upon determining that the message "Completion of the registration of IP telephone apparatus 101" is not returned from ENUM server 103 (step S605: NO), CA 104 transmits, to IP telephone apparatus 101, a message indicating failure of registration as a predetermined process, the predetermined process being performed when the registration to ENUM server 103 has failed (step S613). Likewise, upon determining that the message "Completion of the registration of IP telephone apparatus 102" is not returned from ENUM server 103 (step S61 0: NO), CA 104 transmits, to IP telephone apparatus 102, a message indicating failure of registration as a predetermined process, the predetermined process being performed when the registration to ENUM server 103 has failed (step S614).

Next, when the user of IP telephone apparatus 101 presses absent key 303 since the user is going to be unavailable (step S611), CPU 201 in IP telephone apparatus 101 recognizes the ON signal of absent key 303 and transmits, to CA 104, a message "Register (Unregister)" in order to transmit a request for deleting the NAPTR record of the apparatus information from ENUM server 103 (step S612).

Next, upon receiving the message "Register (Unregister)" from IP telephone apparatus 101 via network I/F 405, CA 104 returns, to IP telephone apparatus 101, a message "200 OK" (step S615).

Next, CA 104 refers to the user data stored in user database 403, based on the telephone number of IP telephone apparatus 101 included in the message "Register (Unregister)". When information regarding the existence of the terminal registration indicates "Registration is confirmed", CA 104 transmits, from network I/F 405 to ENUM server 103, a message "Delete IP telephone apparatus 101" (step S616).

Next, upon receiving the message "Delete IP telephone apparatus 101" from CA 104, ENUM server 103 starts "Nsupdate" and deletes the NAPTR record of IP telephone apparatus 101 stored in the database (step S617). Then, ENUM server 103 returns, to CA 104, a message "Respond indicating completion of the deletion of IP telephone apparatus 101" (step S618).

Next, when IP telephone apparatus 102 requests the NAPTR record of IP telephone apparatus 101, IP telephone apparatus 102 reads, from memory 202, the telephone number of the IP telephone apparatus 101 and regularly transmits, to ENUM server 103, a message "Request the NAPTR record of IP telephone apparatus 101" using the polling function (step S619). Additionally, when four people are registered in memory 202 as call destinations and when each of the NAPTR records of the IP telephone apparatuses is to be requested, IP telephone apparatus 102 is configured to regularly transmit a message "Request the NAPTR record" for each of the IP telephone apparatuses. Upon regularly receiving the message "Request the NAPTR record of IP telephone apparatus 101" transmitted from IP telephone apparatus 102, since in this case the NAPTR record of IP telephone apparatus 101 has been deleted, ENUM server 103 returns, to IP telephone apparatus 102, a message "Respond indicating the deletion of the NAPTR record of IP telephone apparatus 101" (step S620). When the NAPTR record of the IP telephone apparatus 101 has not been deleted, the NAPTR record is returned to the IP telephone apparatus.

Next, upon receiving, from ENUM server 103, the message "Respond indicating the deletion of the NAPTR record of IP telephone apparatus 101" via network I/F 205, CPU 201 in IP telephone apparatus 102 recognizes that the NAPTR record of IP telephone apparatus 101 has been deleted, and turns off the display lamp 305 indicating that the user is available (step S621). More specifically, CPU 201 in IP telephone apparatus 102 searches, from memory 202, the telephone number of IP telephone apparatus 101 when IP telephone apparatus 102 receives the response indicating that the NAPTR record of IP telephone apparatus 101 is deleted. Then, CPU 201 obtains the identification information of the lamp corresponding to IP telephone apparatus 101 (for example, lamp 1) and turns off the display lamp corresponding to lamp 1 indicating that the user is available. For example, in Fig. 3, when IP telephone apparatus 101 is "acquaintance A", the "acquaintance A is available" lamp is turned off in order to notify that acquaintance A is not available.

In the above-described sequence diagram according to Fig. 5 and the flowchart according to Fig. 7, IP telephone apparatus 102 regularly transmits, to CA 104, "Request the NAPTR record of IP telephone apparatus 101" using the polling function. However, the present invention is not limited to this embodiment. For example, CA 104 can be configured to transmit, to IP telephone apparatus 102, a message indicating that the NAPTR record of IP telephone apparatus 101 has been deleted.

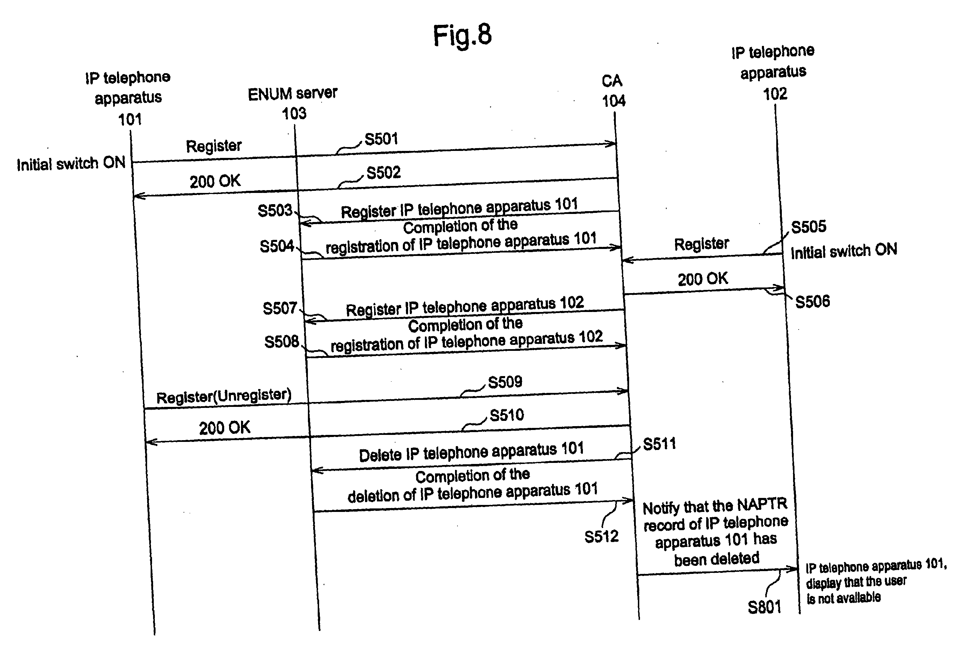

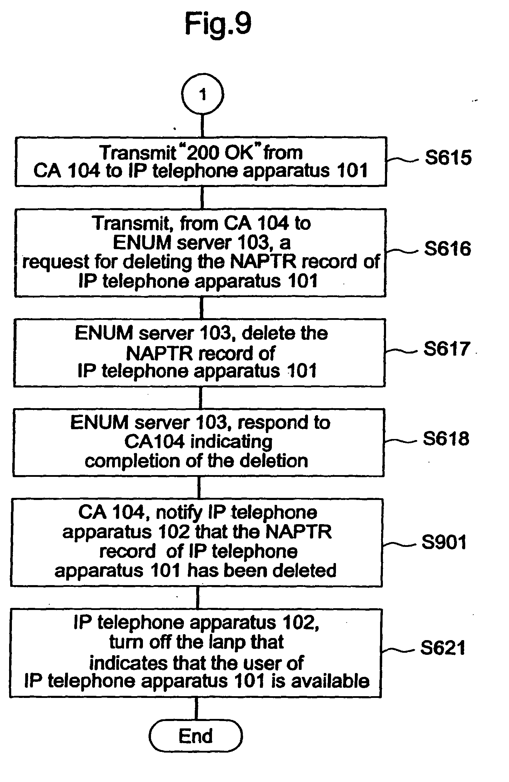

The following describes a case where CA 104 can be configured to transmit, to IP telephone apparatus 102, a message indicating that the NAPTR record of IP telephone apparatus 101 has been deleted with reference to the sequence diagram in Fig. 8 and the flowchart in Fig. 9.

IP telephone apparatus 101 and IP telephone apparatus 102 perform the same registration operation and deletion operation according to the sequence diagram in Fig. 8 as the registration operation and deletion operation according to step S501 through step S512 shown in Fig. 5. Thus, the different operation is indicated as step S801, and the description of the sequence diagram is limited to this operation.

According to the embodiment, though it is not illustrated in Fig. 10, a plurality of the IP telephone apparatuses (for example, five IP telephone apparatuses) including IP telephone apparatus 102 are registered, in user database 403 of CA 104, as call destinations to which it is notified that the registration of the NAPTR record of IP telephone apparatus 101 has been deleted. At the same time, the registration of the IP telephone apparatus as a call destination can be performed by the system administrator.

Then, upon receiving, from ENUM server 103, a message "Completion of the deletion of IP telephone apparatus 101" (step S512), CPU 410 in CA 104 refers to a call destination stored in user database 403 and transmits, to IP telephone apparatus 102, a message "Notify that the NAPTR record of IP telephone apparatus 101 has been deleted" (step S801). At the same time, when a plurality of call destinations are specified, CPU 401 in CA 104 transmits a message "Notify that the NAPTR record of IP telephone apparatus 101 has been deleted" to each of the call destinations.

Upon receiving, from CA 104, the message "Notify that the NAPTR record of IP telephone apparatus 101 has been deleted", CPU 201 in IP telephone apparatus 102 recognizes that the NAPTR record of IP telephone apparatus 101 has been deleted and turns off display lamp 305 indicating that the user is available.

Likewise, in the flowchart shown in Fig. 9, only step S901 is different. In step S901, upon receiving, from ENUM server 103, a message "Completion of the deletion of IP telephone apparatus 101" , CPU 401 in CA 104 refers to a call destination stored in user database 403 and transmits, to IP telephone apparatus 102, a message "Notify that the NAPTR record of IP telephone apparatus 101 has been deleted".

As described above, in IP telephone system 100 according to the embodiment of the present invention, CA 104 stores, in user database 403, the user data of IP telephone apparatus 101 and IP telephone apparatus 102, and registers, into ENUM server 103, a NAPTR record of IP telephone apparatus 101 and IP telephone apparatus 102 based on the user data. Then, when absent key 303 is pressed at IP telephone apparatus 101 and when CA 104 receives a message "Register (Unregister)", which is a request for deleting the NAPTR record from IP telephone apparatus 101, CA 104 transmits, to ENUM server 103, a process of deleting the NAPTR record of IP telephone apparatus 101.

In the above-described embodiment of the present invention, the NAPTR record of IP telephone apparatus 101 is deleted from ENUM server 103, but it is also applicable likewise to a case where the NAPTR record of IP telephone apparatus 102 is deleted from ENUM server 103. Additionally, in the above-described embodiment of the present invention, the deletion of the NAPTR record of IP telephone apparatus 101 is notified to IP telephone apparatus 102, but it is also applicable likewise that the deletion of the NAPTR record of IP telephone apparatus 102 is notified to IP telephone apparatus 101.

When ENUM server 103 receives, from IP telephone apparatus 102, the message "Request the NAPTR record of IP telephone apparatus 101" regularly transmitted from IP telephone apparatus 102 after the process of deleting the NAPTR record, ENUM server 103 transmits, to IP telephone apparatus 102, a message "Respond indicating the deletion of the NAPTR record of IP telephone apparatus 101." Also, CA 104 transmits, to IP telephone apparatus 102, which is previously stored in user database 403 as a call destination, a message "Notify that the NAPTR record of IP telephone apparatus 101 has been deleted."

Upon receiving, from CA 104, the message "Notify that the NAPTR record of IP telephone apparatus 101 has been deleted," IP telephone apparatus 102 turns off the display lamp 305 indicating that the user is available in order to notify the user of IP telephone apparatus 102 that the user of IP telephone apparatus 101 is not available.

As described above, each of the users of IP telephone apparatus 101 and IP telephone apparatus 102 can delete the NAPTR record from ENUM server 103 by simply pressing absent key 303. Therefore, the user can be saved the trouble of deleting the NAPTR record and can notify another IP telephone apparatus that the user is not available. Each of the users of IP telephone apparatus 101 and IP telephone apparatus 102 can also confirm that the user of another IP telephone apparatus is not available by looking at display lamp 305 indicating that the user is available and by seeing that it is OFF, and thus can avoid an unnecessary call. As a result, the user-friendly IP telephone system is provided for the user of the IP telephone apparatus.

Additionally, according the above-described embodiment of the present invention, when IP telephone apparatus 101 transmits, to ENUM server 103, a request for deleting the NAPTR record of the terminal apparatus, IP telephone apparatus 101 transmits, to CA 104, a message "Register (Unregister)" according to the operation of absent key 303. However, a different message can also be used.

For example, by using a message "Notify Info" regulated by RFC3427, the telephone number of IP telephone apparatus 101 can be specified in the "P" header of the message "Notify Info" and can be transmitted to CA 104.

When the message "Notify Info" is used, CA 104 can refer to the telephone number of IP telephone apparatus 101 specified in the "P" header of the message "Notify Info" and perform, to ENUM server 103, the process of deleting the NAPTR record of IP telephone apparatus 101.

## Claims

1. A call agent apparatus (104) connectable to an IP telephone apparatus (101, 102) and to an ENUM server (103), the ENUM server storing an NAPTR, Naming Authority Pointer, resource record of the IP telephone apparatus, the call agent apparatus comprising:
an interface (405) configured to receive, from the IP telephone apparatus, a request for deleting, from the ENUM server, the NAPTR resource record of the IP telephone apparatus, the request including the telephone number of the IP telephone apparatus, the NAPTR resource record being stored in the ENUM server;
a controller (401) configured to transmit, to the ENUM server, the request for deleting, from the ENUM server, the NAPTR resource record of the IP telephone apparatus, based on the telephone number of the IP telephone apparatus included in the request;
**characterized in that**
the call agent apparatus is being further connectable to another IP telephone apparatus (102, 101), wherein the controller is adapted to receive, from the ENUM server, a notice indicating that the NAPTR resource record of the IP telephone apparatus is deleted from the ENUM server, in response to the request for deleting the NAPTR resource record of the IP telephone apparatus, and is further adapted to transmit, to the another IP telephone apparatus, a notification indicating that the NAPTR resource record of the IP telephone apparatus has been deleted from the ENUM server, whereby the another IP telephone apparatus is adapted to notify a user of the another IP telephone apparatus that a user of the IP telephone apparatus is unavailable.

2. The call agent apparatus according to claim 1, further including:
a memory (402) configured to store predetermined information regarding a user of the IP telephone apparatus corresponding to the telephone number of the IP telephone apparatus, wherein, when the interface receives the request from the IP telephone apparatus, the controller is adapted to search in the memory for the predetermined information corresponding to the telephone number of the IP telephone apparatus, based on the telephone number included in the request and is adapted to transmit the request to the ENUM server, based on the predetermined information.

3. The call agent apparatus according to claims 1 to 2, wherein, when the interface receives, from the IP telephone apparatus, a request for registering the NAPTR resource record of the IP telephone apparatus in the ENUM server, the controller is adapted to generate the NAPTR resource record based on the predetermined information stored in the memory and is further adapted to transmit, to the ENUM server, the generated NAPTR resource record.

4. The call agent apparatus according to one of claims 1 to 3, wherein the predetermined information comprises a user name of the user, an address of the user, an mail address of the user, and a reference URI of the user.

5. The call agent apparatus according to claim 1, wherein, when the interface does not receive a request for a terminal registration of the IP telephone apparatus for a predetermined period, the controller is adapted to transmit, to the ENUM server, the request for deleting, from the ENUM server, the NAPTR resource record of the IP telephone apparatus.

6. An IP telephone apparatus (101,102) connectable to a call agent apparatus (104) and to an ENUM server (103), the call agent apparatus controlling a connection between IP telephone apparatuses, the ENUM server storing a NAPTR, Naming Authority Pointer, resource record of the IP telephone apparatus, the IP telephone apparatus
a call answering function;
a predetermined key (303) for activating the call answering function when a user of the IP telephone apparatus is absent; and
a controller (201) configured to transmit, to the call agent apparatus, a request for deleting the NAPTR resource record of the IP telephone apparatus from the ENUM server, when the predetermined key is selected,
a panel including an indicator to indicate to the user of the IP telephone apparatus that a user of the another IP telephone apparatus is available or unavailable; and
**characterized in that**:
the controller is further configured to transmit, to the call agent apparatus, an inquire for the NAPTR resource record of the another IP telephone apparatus to the ENUM server, and to indicate, via the indicator, to the user of the IP telephone apparatus that the user of the another IP telephone apparatus is unavailable when the controller receives a notice indicating that the NAPTR resource record of the another IP telephone apparatus has been deleted from the ENUM server, in response to the inquire.

7. The IP telephone apparatus according to claim 6, wherein the controller is adapted to transmit, to the call agent apparatus, a request for a terminal registration of the IP telephone apparatus at predetermined intervals, and is adapted to stop transmitting the request to the call agent apparatus when the predetermined key is selected.

8. The IP telephone apparatus of claim 6, wherein
the controller is further configured to transmit, to the call agent apparatus, an inquire for the NAPTR resource record of the another IP telephone apparatus to the ENUM server, and to indicate, via the indicator, to the user of the IP telephone apparatus that the user of the another IP telephone apparatus is available when the controller receives a notice indicating that the NAPTR resource record of the another IP telephone apparatus is registered in the ENUM server, in response to the inquire.

9. An IP telephone system (100) comprising:
a call agent apparatus (104) configured to control a connection between IP telephone apparatuses;
an ENUM server (103) configured to store NAPTR, Naming Authority Pointer, resource records of IP telephone apparatuses; and
an IP telephone apparatus (101, 102) configured to transmit, to the call agent apparatus, a request for deleting the NAPTR resource record of the IP telephone apparatus from the ENUM server,
the call agent apparatus further comprising:
an interface configured (405) to receive, from the IP telephone apparatus, the request for deleting the NAPTR resource record of the IP telephone apparatus from the ENUM server, the request including the telephone number of the IP telephone apparatus;
a controller (401) configured to transmit, to the ENUM server, the request for deleting the NAPTR resource record of the IP telephone apparatus from the ENUM server, based on the telephone number of the IP telephone apparatus included in the request;
wherein the call agent apparatus is connected to another IP telephone apparatus (102, 101),
**characterized in that**
when the controller receives, from the ENUM server,a notice indicating that the NAPTR resource record of the IP telephone apparatus is deleted in response to the request for deleting the NAPTR resource record of the IP telephone apparatus, the controller is adapted to transmit, to the another IP telephone apparatus, a notification indicating that the NAPTR resource record of the IP telephone apparatus has been deleted from the ENUM server.

10. The IP telephone system according to claim 9, further comprising:
a memory (402) configured to store predetermined information corresponding to a telephone number of the IP telephone apparatus,
and the controller is adapted to search in the memory for the predetermined information corresponding to the telephone number of the IP telephone apparatus, based on the telephone number included in the request, and is further adapted to transmit the request to the ENUM server, based on the predetermined information.

## Patentansprüche

1. Eine Anrufvermittlervorrichtung (104), die an eine IP-Telefonvorrichtung (101, 102) und an einem ENUM-Server (103) anschließbar ist, wobei der ENUM-Server einen NAPTR, Namensgebungsautoritäts-Zeiger, Ressource-Eintrag der IP-Telefonvorrichtung speichert, wobei die Anrufvermittlervorrichtung umfasst:
eine Schnittstelle (405), die konfiguriert ist von der IP-Telefonvorrichtung eine Anfrage zu empfangen, um von dem ENUM-Server den NAPTR-Ressource-Eintrag der IP-Telefonvorrichtung zu löschen, wobei die Anfrage die Telefonnummer der IP-Telefonvorrichtung enthält, wobei der NAPTR-Ressource-Eintrag in dem ENUM-Server gespeichert ist;
eine Steuereinheit (401), die konfiguriert ist an den ENUM-Server die Anfrage zur Löschung des NAPTR-Ressource-Eintrags der IP-Telefonvorrichtung von dem ENUM-Server zu übertragen, basierend auf der Telefonnummer der IP-Telefonvorrichtung, die in der Anfrage enthalten ist;
**gekennzeichnet dadurch, dass**
die Anrufvermittlervorrichtung zusätzlich an eine andere IP-Telefonvorrichtung (102, 101) anschließbar ist, wobei die Steuereinheit angepasst ist von dem ENUM-Server eine Mitteilung zu empfangen, die angibt, dass der NAPTR-Ressource-Eintrag der IP-Telefonvorrichtung von dem ENUM-Server gelöscht ist, in Antwort auf die Anfrage zur Löschung des NAPTR-Ressource-Eintrags der IP-Telefonvorrichtung, und weiterhin angepasst ist an die andere IP-Telefonvorrichtung eine Benachrichtigung zu übertragen, die angibt, dass der NAPTR-Ressource-Eintrag der IP-Telefonvorrichtung von dem ENUM-Server gelöscht worden ist, wobei die andere IP-Telefonvorrichtung angepasst ist einen Benutzer der anderen IP-Telefonvorrichtung zu benachrichtigen, dass ein Benutzer der IP-Telefonvorrichtung nicht zur Verfügung steht.

2. Die Anrufvermittlervorrichtung gemäß Anspruch 1, weiterhin umfassend:
einem Speicher (402), der konfiguriert ist vorbestimmte Information, in Bezug auf einen Benutzer der IP-Telefonvorrichtung, die der Telefonnummer der IP-Telefonvorrichtung entspricht, zu speichern, wobei die Steuereinheit, wenn die Schnittstelle die Anfrage von der IP-Telefonvorrichtung empfängt, angepasst ist in dem Speicher nach der vorbestimmten Information zu suchen, die der Telefonnummer der IP-Telefonvorrichtung entspricht, basierend auf der Telefonnummer, die in der Anfrage enthalten ist, und die angepasst ist die Anfrage an den ENUM-Server zu übertragen, basierend auf der vorbestimmten Information.

3. Die Anrufvermittlervorrichtung gemäß den Ansprüchen 1 bis 2, wobei die Steuereinheit, wenn die Schnittstelle von der IP-Telefonvorrichtung eine Anfrage zum Registrieren des NAPTR-Ressource-Eintrags der IP-Telefonvorrichtung in den ENUM-Server empfängt, angepasst ist den NAPTR-Ressource-Eintrag, basierend auf der vorbestimmten Information, die in dem Speicher gespeichert ist, zu erzeugen, und weiterhin angepasst ist den erzeugten NAPTR-Ressource-Eintrag an den ENUM-Server zu übertragen.

4. Die Anrufvermittlervorrichtung gemäß eines der Ansprüche 1 bis 3, wobei die vorbestimmte Information einen Benutzemamen des Benutzers, eine Adresse des Benutzers, eine Mailadresse des Benutzers und eine Referenz URI des Benutzers umfasst.

5. Die Anrufvermittlervorrichtung gemäß Anspruch 1, wobei die Steuereinheit, wenn die Schnittstelle nicht eine Anfrage für eine Endgerätregistrierung der IP-Telefonvorrichtung während einer vorherbestimmten Periode empfängt, angepasst ist an den ENUM-Server die Anfrage zur Löschung des NAPTR-Ressource-Eintrags der IP-Telefonvorrichtung von dem ENUM-Server zu übertragen.

6. Eine IP-Telefonvorrichtung (101, 102), die an eine Anrufvermittlervorrichtung (104) und an einem ENUM-Server (103) anschließbar ist, wobei die Anrufvermittlervorrichtung eine Verbindung zwischen IP-Telefonvorrichtungen steuert, wobei der ENUM-Server einen NAPTR, Namensgebungsautoritäts-Zeiger, Ressource-Eintrag der IP-Telefonvorrichtung speichert, wobei die IP-Telefonvorrichtung umfasst:
eine Anrufantwortfunktion;
eine vorbestimmte Taste (303) zum Aktivieren der Anrufantwortfunktion wenn ein Benutzer der IP-Telefonvorrichtung abwesend ist; und
eine Steuereinheit (201), die konfiguriert ist an die Anrufvermittlervorrichtung eine Anfrage zur Löschung des NAPTR-Ressource-Eintrags der IP-Telefonvonrrichtung von dem ENUM-Server zu übertragen, wenn die vorbestimmte Taste ausgewählt ist,
ein Bedienungsfeld, das eine Anzeige enthält, um dem Benutzer der IP-Telefonvorrichtung anzuzeigen, dass ein Benutzer der anderen IP-Telefonvorrichtung verfügbar ist oder nicht zur Verfügung steht; und
**gekennzeichnet dadurch, dass**
die Steuereinheit weiterhin konfiguriert ist eine Erkundigung an den ENUM-Server nach dem NAPTR-Ressource-Eintrag der anderen IP-Telefonvorrichtung an die Anrufvermittlervorrichtung zu übertragen, und mittels der Anzeige dem Benutzer der IP-Telefonvorrichtung anzuzeigen, dass der Benutzer der anderen IP-Telefonvorrichtung nicht zur Verfügung steht wenn die Steuereinheit eine Mitteilung empfängt, die angibt, dass der NAPTR-Ressource-Eintrag der anderen IP-Telefonvorrichtung von dem ENUM-Server gelöscht worden ist, in Antwort auf die Erkundigung.

7. Die IP-Telefonvorrichtung gemäß Anspruch 6, wobei die Steuereinheit angepasst ist an die Anrufvermittlervorrichtung eine Anfrage für eine Endgerätregistrierung der IP-Telefonvorrichtung an vorbestimmten Intervallen zu übertragen, und die angepasst ist das Übertragen der Anfrage an die Anrufvermittlervorrichtung zu stoppen, wenn die vorbestimmte Taste ausgewählt ist.

8. Die IP-Telefonvorrichtung von Anspruch 6, wobei
die Steuereinheit weiterhin konfiguriert ist eine Erkundigung an den ENUM-Server nach dem NAPTR-Ressource-Eintrag der anderen IP-Telefonvorrichtung an die Anrufvermittlervorrichtung zu übertragen, und mittels der Anzeige dem Benutzer der IP-Telefonvorrichtung anzuzeigen, dass der Benutzer der anderen IP-Telefonvorrichtung verfügbar ist wenn die Steuereinheit eine Mitteilung empfängt, die angibt, dass der NAPTR-Ressource-Eintrag der anderen IP-Telefonvorrichtung in dem ENUM-Server registriert ist, in Antwort auf die Erkundigung.

9. Ein IP-Telefonsystem (100), umfassend:
einer Anrufvermittlervorrichtung (104), die konfiguriert ist eine Verbindung zwischen IP-Telefonvorrichtungen zu steuern;
einem ENUM-Server (103), der konfiguriert ist NAPTR, Namensgebungsautoritäts-Zeiger, Ressource-Einträge der IP-Telefonvorrichtungen zu speichern; und
einer IP-Telefonvorrichtung (101, 102), die konfiguriert ist an die Anrufvermittlervorrichtung eine Anfrage zur Löschung des NAPTR-Ressource-Eintrags der IP-Telefonvorrichtung von dem ENUM-Server zu übertragen,
wobei die Anrufvermittlervorrichtung weiterhin umfasst:
eine Schnittstelle (405), die konfiguriert ist von der IP-Telefonvorrichtung die Anfrage zur Löschung des NAPTR-Ressource-Eintrags der IP-Telefonvorrichtung von dem ENUM-Server zu empfangen, wobei die Anfrage die Telefonnummer der IP-Telefonvorrichtung enthält;
eine Steuereinheit (401), die konfiguriert ist an den ENUM-Server die Anfrage zur Löschung des NAPTR-Ressource-Eintrags der IP-Telefonvorrichtung von dem ENUM-Server zu übertragen, basierend auf der Telefonnummer der IP-Telefonvorrichtung, die in der Anfrage enthalten ist;
wobei die Anrufvermittlervorrichtung mit einer anderen IP-Telefonvorrichtung (102, 101) verbunden ist,
**gekennzeichnet dadurch, dass**
wenn die Steuereinheit von dem ENUM-Server eine Mitteilung empfängt, die angibt, dass der NAPTR-Ressource-Eintrag der IP-Telefonvorrichtung in Antwort auf die Anfrage zur Löschung des NAPTR-Ressource-Eintrags der IP-Telefonvorrichtung gelöscht ist, die Steuereinheit angepasst ist an die andere IP-Telefonvorrichtung eine Benachrichtigung zu übertragen, die angibt, dass der NAPTR-Ressource-Eintrag der IP-Telefonvorrichtung von dem ENUM-Server gelöscht worden ist.

10. Das IP-Telefonsystem gemäß Anspruch 9, weiterhin umfassend:
einem Speicher (402), der konfiguriert ist vorbestimmte Information zu speichern, die einer Telefonnummer der IP-Telefonvorrichtung entspricht,
und wobei die Steuereinheit angepasst ist in dem Speicher nach der vorbestimmten Information, die der Telefonnummer der IP-Telefonvorrichtung entspricht, zu suchen, basierend auf der Telefonnummer, die in der Anfrage enthalten ist, und die weiterhin angepasst ist die Anfrage, basierend auf der vorbestimmten Information, an den ENUM-Server zu übertragen.

## Revendications

1. Appareil de gestion d'appel (104) connectable à un appareil téléphonique IP (101, 102) et à un serveur ENUM (103), le serveur ENUM stockant une entrée de ressource NAPTR, pointeur d'une autorité de nommage, de l'appareil téléphonique IP, l'appareil de gestion d'appel comprenant :
une interface (405) configurée pour recevoir, en provenance de l'appareil téléphonique IP, une requête d'effacement, du serveur ENUM, de l'entrée de ressource NAPTR de l'appareil téléphonique IP, la requête comprenant le numéro de téléphone de l'appareil téléphonique IP, l'entrée de ressource NAPTR étant stockée dans le serveur ENUM ;
une unité de commande (401) configurée pour transmettre, au serveur ENUM, la requête d'effacement, du serveur ENUM, de l'entrée de ressource NAPTR de l'appareil téléphonique IP, sur la base du numéro de téléphone de l'appareil téléphonique IP compris dans la demande ;
**caractérisé en ce que**
l'appareil de gestion d'appel est en outre connectable à un autre appareil téléphonique IP (102, 101), dans lequel l'unité de commande est adaptée pour recevoir, du serveur ENUM, un message indiquant que l'entrée de ressource NAPTR de l'appareil téléphonique IP est effacée du serveur ENUM, en réponse à la requête d'effacement de l'entrée de ressource NAPTR de l'appareil téléphonique IP, et est en outre adaptée pour transmettre, à l'autre appareil téléphonique IP, une notification indiquant que l'entrée de ressource NAPTR de l'appareil téléphonique IP a été effacé du serveur ENUM, de telle manière que l'autre appareil téléphonique IP soit adapté pour notifier à un utilisateur de l'autre appareil téléphonique IP qu'un utilisateur de l'appareil téléphonique IP est indisponible.

2. Appareil de gestion d'appel selon la revendication 1, comprenant en outre :
une mémoire (402) configurée pour stocker des informations prédéterminées concernant un utilisateur de l'appareil téléphonique IP correspondant au numéro de téléphone de l'appareil téléphonique IP, dans lequel, lorsque l'interface reçoit la requête de l'appareil téléphonique IP, l'unité de commande est adaptée pour rechercher dans la mémoire les informations prédéterminées correspondant au numéro de téléphone de l'appareil téléphonique IP, sur la base du numéro de téléphone compris dans la requête et est adaptée pour transmettre la requête au serveur ENUM, sur la base des informations prédéterminées.

3. Appareil de gestion d'appel selon les revendications 1 à 2, dans lequel, lorsque l'interface reçoit, en provenance de l'appareil téléphonique IP, une requête d'enregistrement de l'entrée de ressource NAPTR de l'appareil téléphonique IP dans le serveur ENUM, l'unité de commande est adaptée pour générer l'entrée de ressource NAPTR sur la base des informations prédéterminées stockées dans la mémoire et est en outre adaptée pour transmettre, au serveur ENUM, l'entrée de ressource NAPTR générée.

4. Appareil de gestion d'appel selon l'une quelconque des revendications 1 à 3, dans lequel les informations prédéterminées comprennent un nom d'utilisateur de l'utilisateur, une adresse de l'utilisateur, une adresse électronique de l'utilisateur, et une référence URI de l'utilisateur.

5. Appareil de gestion d'appel selon la revendication 1, dans lequel, lorsque l'interface ne reçoit pas de requête d'enregistrement du terminal de l'appareil téléphonique IP pendant une période prédéterminée, l'unité de commande est adaptée pour transmettre, au serveur ENUM, la requête d'effacement, du serveur ENUM, de l'entrée de la ressource NAPTR de l'appareil téléphonique IP.

6. Appareil téléphonique IP (101, 102) connectable à un appareil de gestion d'appel (104) et à un serveur ENUM (103), l'appareil de gestion d'appel commandant une connexion entre les appareils téléphoniques IP, le serveur ENUM stockant une entrée de ressource NAPTR, pointeur d'une autorité de nommage, de l'appareil téléphonique IP, l'appareil téléphonique IP comprenant :
une fonction de réponse à un appel ;
une touche prédéterminée (303) pour activer la fonction de réponse à un appel lorsqu'un utilisateur de l'appareil téléphonique IP est absent ; et
une unité de commande (201) configurée pour transmettre, à l'appareil de gestion d'appel, une requête d'effacement de l'entrée de ressource NAPTR de l'appareil téléphonique IP du serveur ENUM, lorsque la touche prédéterminée est sélectionnée,
un panneau comprenant un indicateur pour indiquer à l'utilisateur de l'appareil téléphonique IP qu'un utilisateur de l'autre appareil téléphonique IP est disponible ou indisponible ; et
**caractérisé en ce que :**
l'unité de commande est en outre configurée pour transmettre, à l'appareil de gestion d'appel, une demande d'entrée de ressource NAPTR de l'autre appareil téléphonique IP sur le serveur ENUM, et pour indiquer, via l'indicateur, à l'utilisateur de l'appareil téléphonique IP que l'utilisateur de l'autre appareil téléphonique IP est indisponible lorsque l'unité de commande reçoit un message indiquant que l'entrée de ressource NAPTR de l'autre appareil téléphonique IP a été effacée du serveur ENUM, en réponse à la demande.

7. Appareil téléphonique IP selon la revendication 6, dans lequel l'unité de commande est adaptée pour transmettre, à l'appareil de gestion d'appel, une requête d'un enregistrement du terminal de l'appareil téléphonique IP à des intervalles prédéterminés, et est adaptée pour arrêter de transmettre la requête à l'appareil de gestion d'appel lorsque la touche prédéterminée est sélectionnée.

8. Appareil téléphonique IP selon la revendication 6, dans lequel
l'unité de commande est en outre configurée pour transmettre, à l'appareil de gestion d'appel, une demande pour l'entrée de ressource NAPTR de l'autre appareil téléphonique IP sur le serveur ENUM, et pour indiquer, via l'indicateur, à l'utilisateur de l'appareil téléphonique IP que l'utilisateur de l'autre appareil téléphonique IP est disponible lorsque l'unité de commande reçoit un message indiquant que l'entrée de ressource NAPTR de l'autre appareil téléphonique IP est enregistré dans le serveur ENUM, en réponse à la demande.

9. Système téléphonique IP (100) comprenant :
un appareil de gestion d'appel (104) configuré pour commander une connexion entre des appareils téléphoniques IP ;
un serveur ENUM (103) configuré pour stocker des entrées de ressource NAPTR, pointeur d'une autorité de nommage, des appareils téléphoniques IP ; et
un appareil téléphonique IP (101, 102) configuré pour transmettre, à l'appareil de gestion d'appel, une requête d'effacement de l'entrée de ressource NAPTR de l'appareil téléphonique IP du serveur ENUM,
l'appareil de gestion d'appel comprenant en outre :
une interface configurée (405) pour recevoir, en provenance de l'appareil téléphonique IP, la requête d'effacement de l'entrée de ressource NAPTR de l'appareil téléphonique IP du serveur ENUM, la requête comprenant le numéro de téléphone de l'appareil téléphonique IP ;
une unité de commande (401) configurée pour transmettre, au serveur ENUM, la requête d'effacement de l'entrée de ressource NAPTR de l'appareil téléphonique IP du serveur ENUM, sur la base du numéro de téléphone de l'appareil téléphonique IP compris dans la requête ;
dans lequel l'appareil de gestion d'appel est connecté à un autre appareil téléphonique IP (102, 101),
**caractérisé en ce que**
lorsque l'unité de commande reçoit, du serveur ENUM, un message indiquant que l'entrée de ressource NAPTR de l'appareil téléphonique IP est effacé en réponse à la requête d'effacement de l'entrée de ressource NAPTR de l'appareil téléphonique IP, l'unité de commande est adaptée pour transmettre, à l'autre appareil téléphonique IP, une notification indiquant que l'entrée de ressource NAPTR de l'appareil téléphonique IP a été effacée du serveur ENUM.

10. Système téléphonique IP selon la revendication 9, comprenant en outre :
une mémoire (402) configurée pour stocker des informations prédéterminées correspondant à un numéro de téléphone de l'appareil téléphonique IP,
et l'unité de commande est adaptée pour rechercher dans la mémoire des informations prédéterminées correspondant au numéro de téléphone de l'appareil téléphonique IP, sur la base du numéro de téléphone compris dans la requête, et est en outre adaptée pour transmettre la requête au serveur ENUM, sur la base des informations prédéterminées.
